# EUROPEAN PATENT APPLICATION

(11) **EP 3 156 717 A1**
(43) Date of publication of application: **19.04.2017**
(21) Application number: 15796908.0
(22) Date of filing: 10.04.2015
(51) Int. Cl.: F21S 8/10

(54) **VEHICULAR LIGHT GUIDE MEMBER AND VEHICULAR LAMP FIXTURE**

(30) Priority: 22.05.2014 JP 2014105813
(71) Applicant: Ichikoh Industries, Ltd., Kanagawa-ken 259-1192 (JP)
(72) Inventor: NISHIHATA Koji, Isehara-shi Kanagawa 259-1192 (JP)
(74) Representative: Grünecker Patent- und Rechtsanwälte PartG mbB
(86) International application number: PCT/JP2015/061250
(87) International publication number: WO 2015/178125

(57) **Abstract**

A vehicular light guide member according to the present invention is constituted from two light guide members (3U, 3D). Each of the overlapping surfaces (32U, 32D) of each of the two light guide members (3U, 3D) is slanted with respect to the light-guiding direction of the two light guide members (3U, 3D). The overlapping surface (32U) of the upper side light guide member (3U) covers the overlapping surface (32D) of the lower side light guide member (3D) from the emission direction side where the emission light from the two light guide members (3U, 3D) is emitted outward. As a result, the vehicular light guide member according to the present invention has little light leakage, can transmit light efficiently, can alleviate the issue of punctate lights, and can have an improved appearance.

## Description

### TECHNICAL FIELD

The present invention relates to a vehicular light guide member. In addition, the present invention relates to a vehicular lamp fixture which is provided with the vehicular light guide member.

### BACKGROUND ART

Conventionally, vehicular light guide members and vehicular lamp fixtures which are provided with the vehicular light guide members are known (for example, Patent Literature 1 and Patent Literature 2). Hereinafter, conventional vehicular light guide members of Patent Literatures 1 and 2 will be described. The conventional vehicular light guide members each are characterized in that a first light emitting light guide body and a second light emitting light guide body are respectively disposed while the respective end parts thereof are abutted against each other; light from a light source is made incident from an abutment-free end part of the first light emitting light guide body; the incident light is made incident from the first light emitting light guide body to the second light emitting light guide body via the abutted end parts thereof, and the light beams from the first light emitting light guide body and the second light emitting light guide body are thereby emitted and then the first light emitting light guide body and the second light emitting light guide body are respectively lit.

### CITATION LIST

### PATENT LITERATURE

Patent Literature 1: Japanese Unexamined Patent Application Publication No. 2009-211858
Patent Literature 2: Japanese Patent No. 5007362

### SUMMARY OF THE INVENTION

### PROBLEMS TO BE SOLVED BY THE INVENTION

In the vehicular lamp fixture described above, it is important to make light beams incident to a first light emitting light guide body and a second light emitting light guide body efficiently with less leakage.

The problem to be solved by the present invention is that it is important to make light beams incident to the first light emitting light guide body and the second light emitting light guide body efficiently with less leakage.

### MEANS FOR SOLVING THE PROBLEMS

In a first aspect of the present invention, two vehicular light guide members each forming a rod shape to guide light by utilizing full reflection at an inside and overlapping each other in overlapping surfaces, wherein the overlapping surfaces of the two vehicular light guide members each incline with respect to a light guide directions of a respective one of the two vehicular light guide members, and one of the overlapping surfaces of the vehicular light guide members covers another one of the overlapping surfaces of the vehicular light guide members at a side of an emission direction in which the light of each of the two vehicular light guide members is emitted to an outside.

In a second aspect of the present invention, wherein the overlapping surfaces of the two vehicular light guide members are respectively provided at parts, each of which is perpendicular or substantially perpendicular with respect to the light guide direction, and the overlapping surface of the vehicular light guide member at an upper side covers the overlapping surface of the vehicular light guide member at a lower side, at the side of the emission direction.

In a third aspect of the present invention, wherein the overlapping surfaces of the two vehicular light guide members each are composed of a curved surface.

In a fourth aspect of the present invention, wherein a dimension in the light guide direction of the overlapping surface of each of the two vehicular light guide members is about 3 to 4 times larger than a dimension which is perpendicular or substantially perpendicular with respect to the light guide direction of each of the two vehicular light guide members.

In a fifth aspect of the present invention, a vehicular lamp fixture comprising: a lamp housing and a lamp lens which partition a lamp room; and a light source which is disposed in the lamp room and the vehicular light guide members according to claim 1 to make light from the light source incident.

In a sixth aspect of the present invention, wherein the vehicular light guide members each form a shape along an exterior shape of the lamp lens.

### EFFECT OF THE INVENTION

The vehicular light guide member and the vehicular lamp fixture, of the present invention, are characterized in that overlapping surfaces of the two vehicular light guide members respectively incline with respect to light guide directions of the two vehicular light guide members. Thus, in comparison with the conventional vehicular light guide member in which the first light emitting light guide body and the second light emitting light guide body are disposed while the respective end parts thereof are abutted against each other, light beams can be efficiently transmitted with less leakage in the overlapping surfaces of the two vehicular light guide members. Moreover, a direction of the leakage light from each of the overlapping surfaces can be controlled according to an angle of inclination or a layout of each of the overlapping surfaces of the two vehicular light guide members.

### BRIEF DESCRIPTION OF THE DRAWINGS

Fig. 1 is a front view showing an embodiment of a vehicular light guide member and a vehicular lamp fixture, according to the present invention.
Fig. 2 is a front view showing two light guide members.
Fig. 3 is a rear view showing the two light guide members (a view indicated by the arrow III in Fig. 4).
Fig. 4 is a plan view showing the two light guide members (a view indicated by the arrow IV in Fig. 2).
Fig. 5 is a side view showing the two light guide members (a view indicated by the arrow V in Fig. 4).
Fig. 6 is a front view showing an upper side light guide member.
Fig. 7 is a front view showing a lower side light guide member.
Fig. 8 is a sectional view of an overlapping surface of the two light guide members (a sectional view taken along the line VIIIA-VIIIA in Fig. 2 and a sectional view taken along the line VIIIV-VIIIB in Fig. 2).
Fig. 9 is a sectional view showing a part of an inner panel and portions on an incidence surface side of a light source and a light guide member.
Fig. 10 is a transverse sectional view showing a portion at an incidence surface side of the light guide member (a sectional view taken along the line X-X in Fig. 9).
Fig. 11 is a longitudinal sectional view showing the portion at the incidence surface side of the light emitting member (a sectional view taken along the line XI-XI in Fig. 9).
Fig, 12 is an explanatory view showing leakage light in the overlapping surface of each of the two light guide members.

### MODE FOR CARRYING OUT THE INVENTION

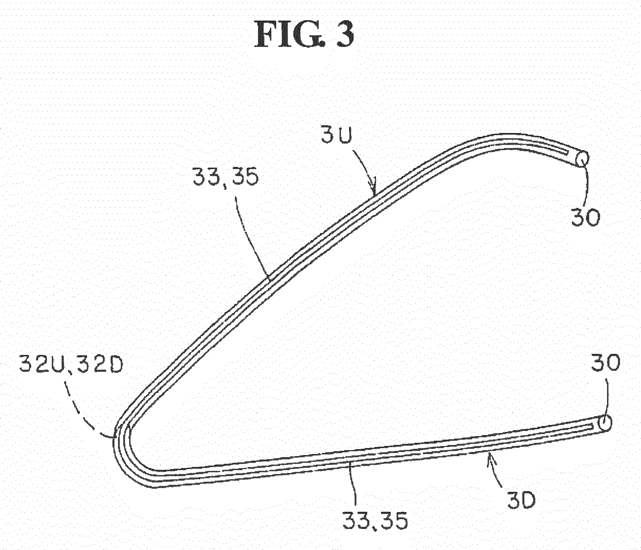

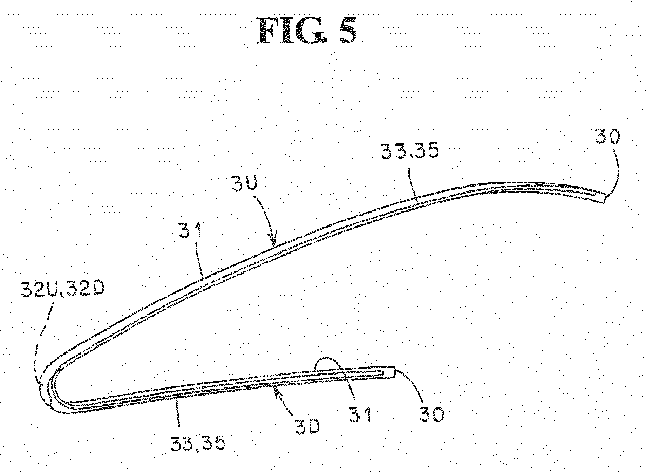

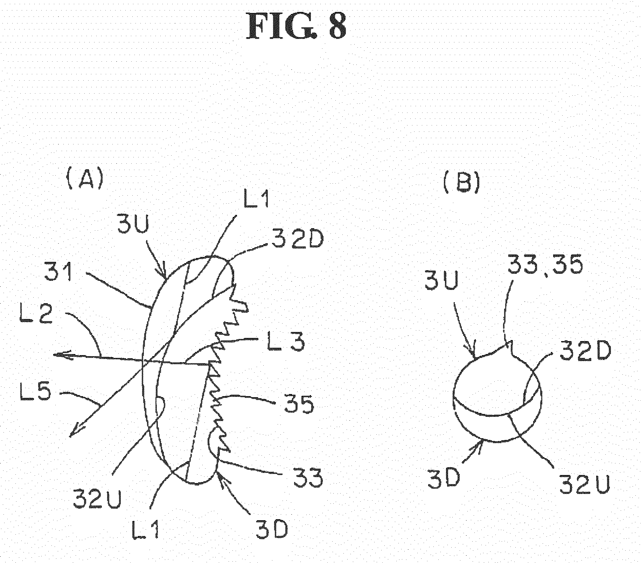

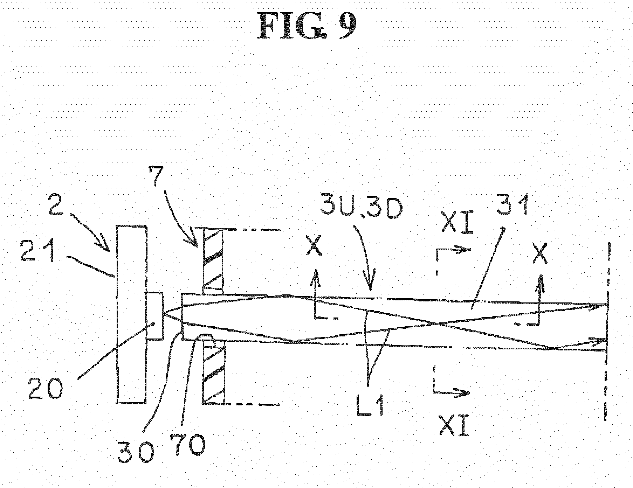

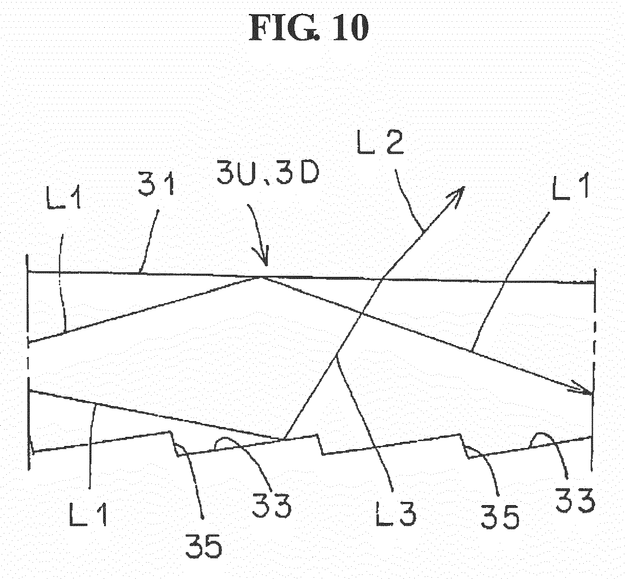

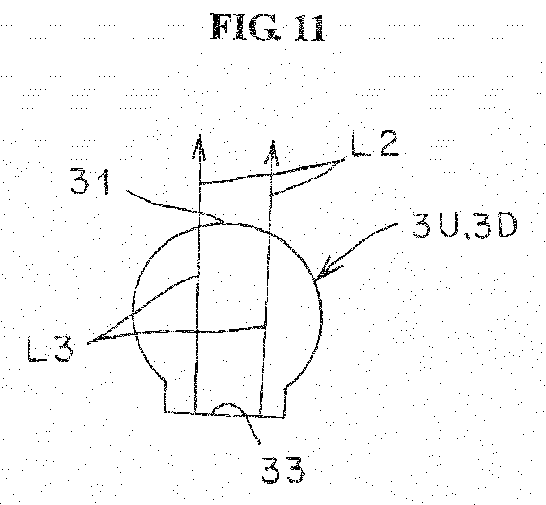

Hereinafter, one example of embodiments of a vehicular light guide member and a vehicular lamp fixture, according to the present invention, will be described in detail with reference to the drawings. It is to be noted that the present invention is limited by the embodiments. In the specification, the terms "forward", "backward", "upper", "lower", "leftward", and "rightward" directions respectively designate the forward, backward, upper, lower, leftward, and rightward directions in a case where the vehicular lamp fixture according to the present invention has been mounted on a vehicle. In Fig. 8 to Fig. 12, hatchings of light guide members are omitted and light beams are indicated by the solid arrows. In addition, in Fig. 9, hatching of a semiconductor-type light source is omitted. Further, in Fig. 3 and Fig. 5, illustrations of reflection surfaces and stepped surfaces on a one by one piece basis are omitted.

### (Description of Configuration of Embodiment)

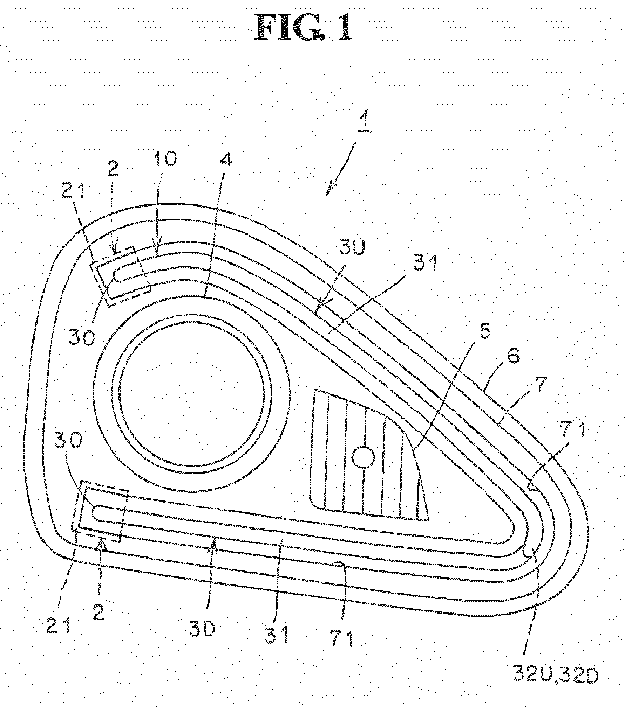

Hereinafter, a configuration of each of a vehicular light guide member and a vehicular lamp fixture, according to the embodiment, will be described. In Fig. 1, reference numeral 1 designates the vehicular lamp fixture according to the embodiment. The vehicular lamp fixture 1 is a clearance lamp as a front combination lamp such as a vehicular headlamp or a headlamp, for example.

The vehicular lamp fixture 1 is mounted at each of the left and right sides at a front part of a vehicle (not shown). A design surface at the front part of the vehicle inclines towards a front side of the vehicle (from a rear side to a front side of the vehicle), in a vertical direction (from an upper side to a lower side of the vehicle) and in a transverse direction (from the inside to outside of the vehicle). As a result, the design surface at each of the left and right sides at the front part of the vehicle is composed of a three-dimensional curved surface.

In the right side vehicular lamp fixture 1 that is mounted at the right side of the vehicle, the outside of the vehicle is at the right side, and the inside of the vehicle is at the left side. On the other hand, in the left side vehicular lamp fixture that is mounted at the left side of the vehicle, the outside of the vehicle is at the left side, and the inside of the vehicle is at the right side.

Hereinafter, the right side vehicular lamp fixture 1 that is mounted at the right side of the vehicle will be described. It is to be noted that the left side vehicular lamp fixture 1 that is mounted at the left side of the vehicle forms a configuration which is similar to that of the right side vehicular lamp fixture except that the left and right thereof are reversed to each other; and therefore, a duplicate description thereof is omitted.

### (Description of Vehicular Lamp Fixture 1)

The vehicular lamp fixture 1, as shown in Fig. 1, is provided with: a lamp unit 10 as a clearance lamp; a low beam headlamp 4 and a high beam headlamp 5 as other lamp units; a lamp housing (not shown); a lamp lens (such as a transparent outer cover or an outer lens, for example) 6; and an inner panel (an inner housing) 7.

The lamp unit 10, the low beam headlamp 4, the high beam headlamp 5, and the inner panel 7 are disposed in a lamp room which is partitioned by the lamp housing and the lamp lens 6.

It is to be noted that, in the lamp room, there may be a case in which in addition to the lamp unit 10, the low beam headlamp 4, the high beam headlamp 5, and other lamp units (not shown) such as a daytime running lamp, a turning signal lamp, a fog lamp, and a cornering lamp are disposed.

### (Description of Lamp Unit 10)

The lamp unit 10 is provided with: two semiconductor-type light sources 2 as light sources; and two light guide members 3U, 3D. A part of the semiconductor-type light sources 2 and the light guide members 3U, 3D is covered with the inner panel 7 as these constituent elements are seen from the lamp lens 6. It is to be noted that, as shown in Fig. 1, most of the light guide members 3U, 3D, the low beam headlamp 4, the high beam headlamp 5, and the inner panel 7 can be seen through the lamp lens 6.

### (Description of Semiconductor-Type Light Sources 2)

The semiconductor-type light sources 2, as shown in Fig. 1 and Fig. 9, in this example, are self-emission semiconductor-type light sources such as an LED, an OEL, or an OLED (an organic EL), for example. The semiconductor-type light sources 2 each are composed of a light emitting portion 20 and a board 21. The semiconductor-type light sources 2 are respectively disposed at the outside and a rear side of the vehicle in the lamp room and at an upper part and a lower part. The semiconductor-type light sources 2 are directly mounted to the lamp housing or are mounted thereto via another member (not shown).

### (Description of Light Guide Members 3U, 3D)

The light guide members 3U, 3D are members to guide the light beams from the semiconductor-type light sources 2, from an incidence surface 30 to an emission surface 31, by utilizing full reflection at the inside (an interior face reflection), respectively. The light guide members 3U, 3D each, in this example are composed of a transparent resin material such as an acrylic resin or PC (polycarbonate), PMMA (methyl polymethacrylate, a methacryl resin). The light guide members 3U, 3D each form a shape of a circular column, that is, a shape of a round rod of which cross section is similar or substantially similar from one end to the other end (a cross section which is perpendicular or substantially perpendicular with respect to the light guide direction Z of each of the light guide members 3U, 3D). A diameter of each of the light guide members 3U, 3D is about 6 to 8 mm in this example.

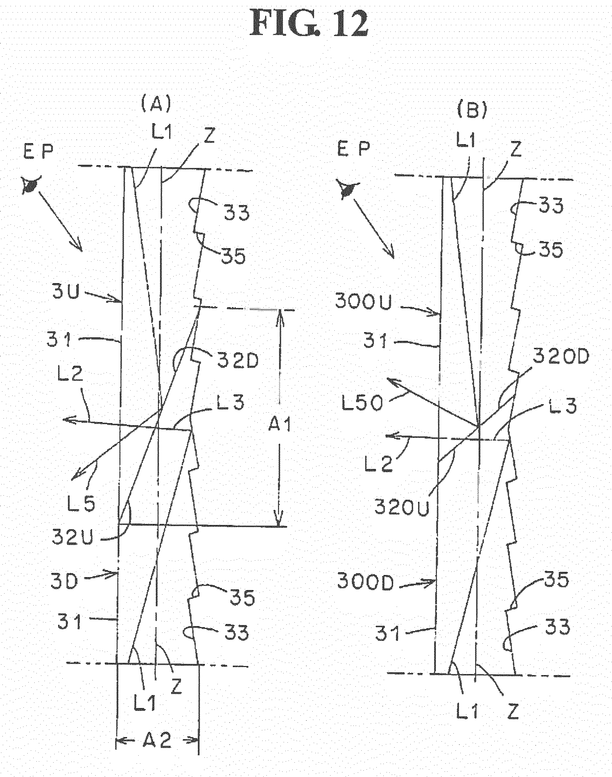

The light guide direction Z (that is, the direction of guiding light) of each of the light guide members 3U, 3D, as shown in Fig. 12, is in the direction of the centerline (the central axis) of each of the light guide members 3U, 3D which forms the columnar shape of which cross section is in a circular shape.

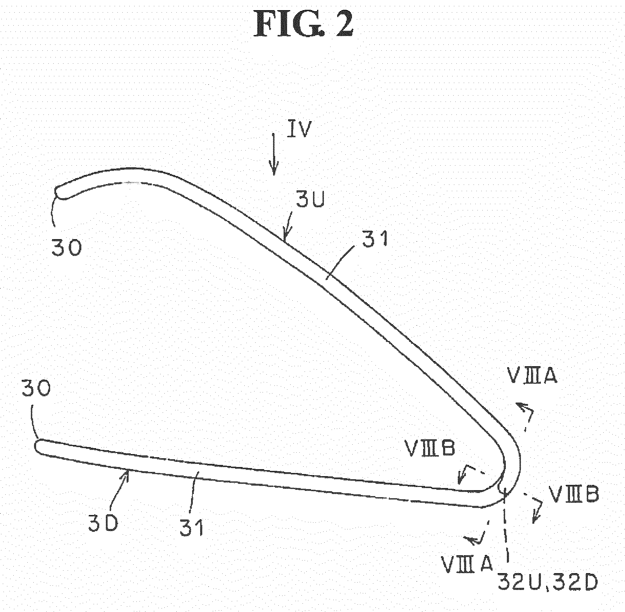

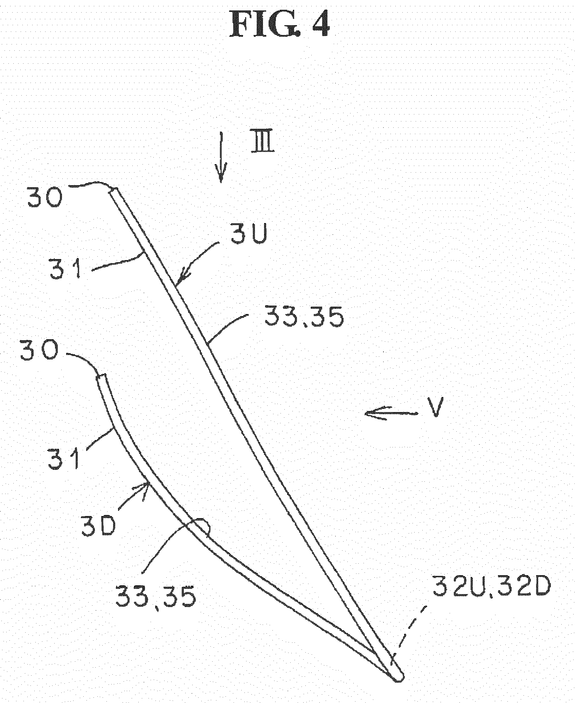

The light guide members 3U, 3D each, as shown in Fig. 1, form a shape along the design surface at the front part of the vehicle and at the design surface in an exterior shape of the lamp lens 6. That is, the light guide members 3U, 3D each, in the front view (Fig. 1, Fig. 2), the rear view (Fig. 3), and the side view (Fig. 5) form a substantially transverse V-shape from the upper side in the exterior shape of the lamp lens 6 towards the lower side through the inside of the vehicle. In addition, the light guide members 3U, 3D each, in the planar view (Fig. 4), form a substantially oblique V-shape from the upper side in the exterior shape of the lamp lens 6 to the lower side through the inside of the vehicle. As described previously, the light guide members 3U, 3D each form a complicated elongated shape in a three-dimensional manner along the exterior shape of the lamp lens 6.

The light guide members 3U, 3D are disposed from the upper side in the external view of the lamp lens 6 in the lamp room towards the lower side through the inside of the vehicle. The light guide members 3U, 3D are directly mounted to the lamp housing or are mounted thereto via another member (not shown). For example, mounting pieces (not shown) which are respectively provided to be integral with the light guide members 3U, 3D are directly mounted to the lamp housing or are mounted thereto via another members (not shown).

The light guide members 3U, 3D are respectively intended to guide light beams by utilizing full reflection at the inside. The light guide members 3U, 3D are respectively provided with: incidence surfaces 30 as one end surfaces; emission surfaces 31; overlapping surfaces 32U, 32D as other end surfaces; and reflection surfaces 33.

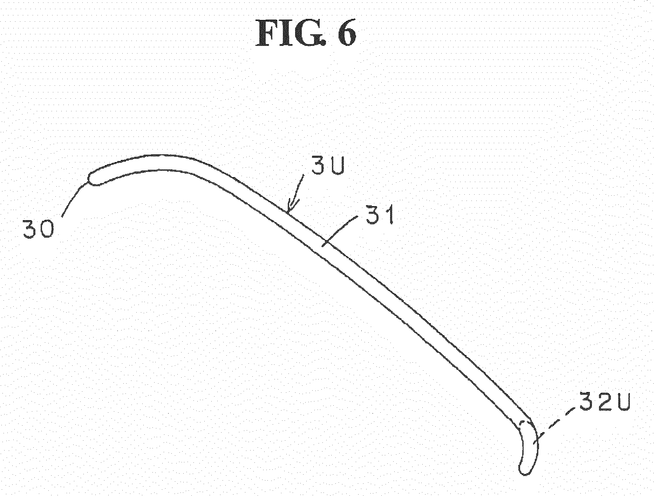

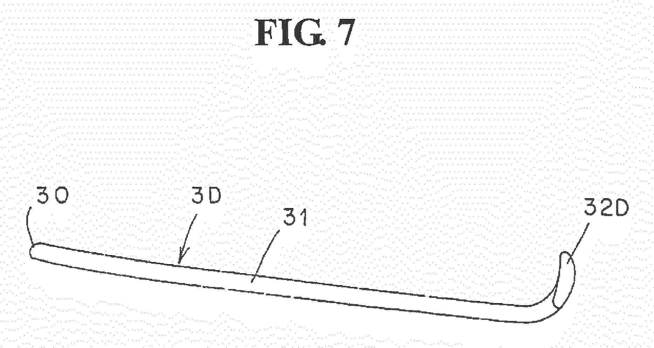

The light guide members 3U, 3D are respectively composed of two light guide members, that is, an upper side light guide member 3U and a lower side light guide member 3D. The upper side light guide member 3U, as shown in Fig. 6, from the incidence surface 30 as one end surface towards the overlapping surface 32U as the other end surface, forms a substantial V-shape along the exterior shape of the lamp lens 6 (the exterior shape from the upper side towards a perpendicular part inside of the vehicle). The lower side light guide member 3U, as shown in Fig. 7, from the incidence surface 30 as one end surface towards the overlapping surface 32D as the other end surface, forms a transverse one-letter shape along the exterior shape of the lamp lens 6 (the exterior shape from the lower side towards the perpendicular part inside of the vehicle).

The two light guide members 3U, 3D each constitute the complicated elongated shape in the three-dimensional manner along the exterior shape of the lamp lens 6 while the overlapping surface 32U of the upper side light guide member 3U and the overlapping surface 32D of the lower side light guide member 3D overlap each other.

### (Description of Incidence Surface 30)

The incidence surface 30 is provided at one end face of each of the light guide members 3U, 3D. The incidence surface 30 opposes to the light emitting portion 20 of the semiconductor-type light source 2. A center of the incidence surface 30 and a center of the light emitting portion 20 are coincident or substantially coincident with each other. The incidence surface 30 is made of a plane or a curved surface or a combination of a plane and a curved surface. The incidence surface 30 makes the light beams that are radiated from the light emitting portion 20, incident into the light guide members 3U, 3D. The incidence surfaces 30, as shown in Fig. 1, as in the semiconductor-type light sources 2, are respectively disposed at the outside and the rear side of the vehicle in the lamp room and at the upper side part and the lower side part.

### (Description of Emission Surface 31)

The emission surface 31 is provided from one side face (that is, a front face) at the front side of each of the light guide member 3U, 3D towards one side face at the upper side (that is, a top face) and one side face at the lower side (that is, a bottom face). The emission surface 31 opposes to the lamp lens 6. The emission surface 31 is made of an arc surface of which sectional shape is an arc (the cross section that is perpendicular or substantially perpendicular with respect to the light guide direction Z of each of the light guide member 3U, 3D). The emission surface 31 is intended to emit incident light L1 to the outside from the inside of each of the light guide members 3U, 3D, the incident light having been incident as emission light L2 from the incidence 30 into each of the light guide members 3U, 3D.

### (Description of Reflection Surface 33)

The reflection surface 33 is provided on one side face (that is, a rear face) at the rear side of each of the light guide members 3U, 3D. The reflection surface 33 is made of a plane of which sectional shape is linear (the cross section that is perpendicular or substantially perpendicular with respect to the light guide direction Z of each of the light guide members 3U, 3D). The reflection surface 33 reflects a part of the incident light L1 to the emission surface 31 side, the incident light having been incident as reflection light L3 from the incidence surface 30 into each of the light guide members 3U, 3D.

The reflection surface 33, as shown in Fig. 3, Fig, 4, Fig. 6, and Fig. 7 is provided in plurality so as to be continuous in the light guide direction Z from one end face of the light guide member 3 towards each of the overlapping surfaces 32U, 32D as the other end face. The reflection surface 33 is not provided at one end part at the incidence surface 30 side of each of the light guide members 3U, 3D and at a portion which is covered with the inner panel 7. A width of the reflection surface 33 is about 2 mm in this example.

Between the reflection surface 33 and the reflection surface 33, a planer (or curved) stepped surface 35 is provided. That is, the reflection surface 33 is provided so as to be continuous in plurality via the stepped surface 35. One of the reflection surfaces 33 and one of the stepped surfaces 35 constitute one prism. The reflection surface 33 inclines from the front side to the rear side of each of the light guide members 3U, 3D with respect to the light guide direction Z (the direction in which the incident light L1 travels).

### (Description of Overlapping Surfaces 32U, 32D)

The overlapping surfaces 32U, 32D, as shown in Fig. 12 (A), respectively inclines with respect to the light guide directions Z of the light guide members 3U, 3D. The overlapping surfaces 32U, 32D each are provided at a part which is perpendicular or substantially perpendicular with respect to the light guide direction Z, that is, at a part along the perpendicular part inside of the vehicle of the exterior shape of the lamp lens 6.

The overlapping surface 32U of the upper side light guide member 3U (the upper side overlapping surface 32U), as shown in Fig. 8 (A) and Fig. 12 (A), covers (hides) the overlapping surface 32D of the lower side light guide member 3D (the lower side overlapping surface 32D) at the front side of each of the light guide members 3U, 3D and at the side of the direction in which the emission light L2 is to be emitted (the emission direction side).

The overlapping surfaces 32U, 32D, as shown in Fig. 8 (A) and Fig. 8 (B), are respectively composed of curved surfaces which overlap each other (three-dimensional curved surfaces or two-dimensional curved surfaces).

A dimension A1 (about 25 mm) in the light guide direction Z of each of the overlapping surfaces 32U, 32D, as shown in Fig. 12 (A), is about 3 to 4 times larger than a dimension A2 (about 6 to 8 mm) which is perpendicular or substantially perpendicular with respect to the light guide direction Z of each of the overlapping surfaces 32U, 32D.

### (Description of Low Beam Headlamp 4 and High Beam Headlamp 5)

The low beam headlamp 4 is intended to radiate a low beam light distribution pattern from the lamp lens 6 to the front side of the vehicle. The high beam headlamp 5 is intended to radiate a high beam light distribution pattern from the lamp lens 6 to the front side of the vehicle.

### (Description of Lamp Lens 6)

The design surface of the lamp lens 6 inclines along the design surface at the front part of the vehicle, from the rear side to the front side of the vehicle, from the upper side to the lower side of the vehicle and from the outside to the inside of the vehicle.

### (Description of Inner Panel 7)

The inner panel 7 is directly mounted to the lamp housing or is mounted thereto via another member (not shown). The inner panel 7 conceals a part of the semiconductor-type light source 2 and the light guide members 3D, 3U, that is, one end part at the incidence surface 30 side when the panel is seen from the lamp lens 6.

In the inner panel 7, there is provided a through hole 70 through which one end part at the incidence surface 30 side of each of the light guide members 3U, 3D is to be inserted. Of the inner panel 7, at a part at which each of the light guide members 3U, 3D is positioned, a storage groove portion 71 is provided. In the storage groove portion 71, each of the light guide member 3U, 3D is stored. In the storage groove portion 71, one side which opposes to the lamp lens 6 opens, and three sides are closed by erected walls. The erected walls of the storage groove portion 71 each is employed as a reflection surface. It is to be noted that the reflection surfaces each are formed of a material for the inner panel 7 as it is. Here, the erected walls of the storage groove portion 71 all may be constructed by applying coating or vapor deposition of a metal such as aluminum or silver so that a reflection surface of which reflection efficiency is high is thereby obtained.

### (Description of Functions of Embodiment)

The vehicular lamp fixture 1 according to the embodiment is made of the constituent elements as described above, and hereinafter, functions thereof will be described.

Light emitting portions 20 of the two semiconductor-type light sources 2 of the lamp unit 10 are lit. Afterwards, the light beams that have been radiated from the light emitting portions 20 are respectively incident from the incidence surfaces 30 of the two light guide members 3U, 3D into the light guide members 3U, 3D. The incident light L1 that has been incident into the two light guide members 3U, 3D is guided from the incidence surface 30 at one end to the respective overlapping surfaces 32U, 32D at the other end while full reflection is repeated inside of the two light guide members 3U, 3D.

A part of the incident light L1 in each of the light guide members 3D, 3U that is guided from one end to the other end is reflected as reflection light L3 to the front face of the emission surface 31 as an arc surface by means of the reflection surface 33. The reflection light L3 is transmitted as emission light L2 from the front side of the emission surface 31 through the lamp lens 6 to the outside, that is, the front side of the vehicle. In this manner, light is emitted from the front face of the emission surface 31 in a linear shape of each of the light guide members 3U, 3D (the linear shape in the substantially transverse V-shape in a front view of Fig. 1 and Fig. 2). The emission light L2 is emitted as a clearance lamp light distribution pattern to the front side of the vehicle. The clearance lamp light distribution pattern illuminates the range of 80 degrees outside of the vehicle, about 45 degrees inside of the vehicle, and about 15 degrees upward and downward of the vehicle.

Here, the incident light L1 of the upper side light guide member 3U is transmitted to the lower side light guide member 3D through the overlapping surfaces 32U, 32D. At this time, a part of the incident light L1, as shown in Fig. 8 (A) and Fig. 12 (A), is reflected in the overlapping surfaces 32U, 32D and then is emitted as leakage light L5 from the emission surface 31 of the upper side light guide member 3U to the outside, towards the lower side with respect to the emission direction of the emission light L2 mentioned previously. Thus, the leakage light L5 does not get into an eye EP (an eye point) of a person who is at a position which is upper than that of the vehicular lamp fixture 1 according to the embodiment. In this manner, it is possible to eliminate punctate light (a sense of glare to be felt) exerted by reflection of a part of the incident light L1 in the overlapping surfaces 32U, 32D of the two light guide members 3U, 3D and the appearance is improved.

On the other hand, the incident light L1 of the lower side light guide member 3D is transmitted to the upper side light guide member 3U through the overlapping surfaces 32D, 32U. At this time, a part of the incident light L1, although not sown, is reflected in the overlapping surfaces 32D, 32U and then is emitted as leakage light (not shown) to the outside from an opposite surface (the reflection surface 33, stepped surface 35) to the emission surface 21 at the front face side of the lower side light guide member 3D. Thus, the leakage light does not get into an eye EP of a person who is at a position at the front face side of the vehicular lamp fixture 1 according to the embodiment. In this manner, it is possible to eliminate puncture light (the sense of glare to be felt) exerted by reflection of a part of the incident light L1 in the overlapping surfaces 32D, 32U of the two light guide members 3D, 3U, and the appearance is improved.

### (Description of Advantageous Effects of Embodiment)

The vehicular lamp fixture 1 according to the embodiment is made of the constituent elements and functions as described above, and hereinafter, advantageous effects thereof will be described.

The vehicular lamp fixture 1 according to the embodiment is characterized in that the overlapping surfaces 32U, 32D of the two light guide members 3U, 3D respectively incline with respect to the light guide directions Z of the two light guide members 3U, 3D. Thus, in comparison with the conventional vehicular light guide member in which the first light emitting light guide body and the second light emitting light guide body are disposed while the respective end parts thereof are abutted against each other, light, that is, incident light L1 can be efficiently transmitted with less leakage in the overlapping surfaces 32U, 32D of the two light guide members 3U, 3D. Moreover, it is possible to control the direction of leakage light L5 from each of the overlapping surfaces 32U, 32D in accordance with the angle of inclination or layout or the like of each of the overlapping surfaces 32U, 32D of the two light guide members 3U, 3D.

In particular, the vehicular lamp fixture 1 according to the embodiment is characterized in that the overlapping surfaces 32U, 32D each are provided at a part which is perpendicular or substantially perpendicular with respect to the light guide direction Z, that is, at a part along the perpendicular part inside of the vehicle of the exterior shape of the lamp lens 6. Moreover, the upper side overlapping surface 32U covers the lower side overlapping surface 32D at the front face side of each of the light guide member 3U, 3D and at the side of the direction in which the emission light L2 is to be emitted. Thus, as in the functions described previously, a part of the incident light L1 of the upper side light guide member 3U, as shown in Fig. 8 (A) and Fig. 12 (A), is reflected in the overlapping surfaces 32U, 32D, and is emitted as leakage light L5 towards the lower side from the emission surface 31 of the upper side light guide member 3U to the outside with respect to the emission direction of the emission light L2. Thus, the leakage light L5 does not get into an eye EP (eye point) of a person who is at a position which is upper than that of the vehicular lamp fixture 1 according to the embodiment. In this manner, it is possible to eliminate puncture light (the sense of glare to be felt) exerted by reflection of a part of the incident light L1 in the overlapping surfaces 32U, 32D of the two light guide members 3U, 3D, and the appearance is improved.

On the other hand, a part of the incident light L1 of the lower side light guide member 3D, although not shown, is reflected in the overlapping surfaces 32D, 32U, and is emitted as leakage light (not shown) to the outside from the opposite surface (the reflection surface 33, stepped surface 35) to the emission surface 31 at the front face side of the lower side light guide member 3D. Thus, the leakage light does not get into an eye (EP) of a person who is at a position at the front face side of the vehicular lamp fixture 1 according to the embodiment. In this manner, it is possible to eliminate puncture light (the sense of glare to be felt) exerted by reflection of a part of the incident light L1 in the overlapping surfaces 32D, 32U of the two light guide members 3D, 3U, and the appearance is improved.

In addition, the vehicular lamp fixture 1 according to the embodiment is characterized in that the overlapping surfaces 32U, 32D, as shown in Fig. 8 (A) and Fig. 8 (B), are respectively composed of curves surfaces which overlap each other (three-dimensional curved surfaces or two-dimensional curved surfaces). Thus, a part of the incident light L1 is diffused and reflected in the overlapping surfaces 32U, 32D. In this manner, puncture light (the sense of glare to be felt) can be further reliably eliminated, and the appearance is further improved.

Further, the vehicular lamp fixture 1 according to the embodiment is characterized in that the dimension A1 (about 25 mm) in the light guide direction Z of each of the overlapping surfaces 32U, 32D, as shown in Fig. 12 (A), is about 3 to 4 times larger than the dimensions A2 (about 6 to 8 mm) which is perpendicular or substantially perpendicular with respect to the light guide direction Z of each of the overlapping surfaces 32U, 32D. Thus, a part of the incident light L1 of the upper side light guide member 3U, as shown in Fig. 8 (A) and Fig. 12 (A), is reflected in the overlapping surfaces 32U, 32U, and is emitted as leakage light L5 to the outside from the emission surface 31 of the upper side light guide member 3U, towards a further lower side with respect to the emission direction of the emission light L2. In this manner, the leakage light L5 further hardly gets into an eye EP of a person, the puncture light (the sense of glare to be felt) can be further reliably eliminated, and the appearance is further improved.

Here, as shown in Fig. 12 (B), a description will be furnished with respect to a case in which a dimension in the light guide direction Z of each of the overlapping surfaces 320U, 320D is about 1.4 times somewhat larger than a dimension which is perpendicular or substantially perpendicular with respect to the light guide direction Z of each of the overlapping surfaces 320U, 320D. In this case, a part of the incident light L1 of an upper side light guide member 300U, as shown in Fig. 12 (B), is reflected in the overlapping surfaces 320U, 320D, and is emitted as leakage light L50 to the outside from the emission surface 31 of the upper side light guide member 300U towards the upper side with respect to the emission direction of the emission light L2. In this manner, the leakage light L50 easily gets into an eye EP of a person, the puncture light (the sense of glare to be felt) increases, and there is a problem in terms of appearance. It is to be noted that, in Fig. 12 (B), reference numeral 300D designates a lower side light guide member.

On the other hand, the vehicular lamp fixture 1 according to the embodiment is characterized in that the dimension A1 in the light guide direction of each of the overlapping surface 32U, 32D is larger than the dimension A2 that is perpendicular or substantially perpendicular with respect to the light guide direction Z of each of the overlapping surfaces 32U, 32D; and therefore, the leakage light L5 is emitted to the outside from the emission surface 31 of the upper side light guide member 3U, towards a further lower side with respect to the emission direction of the emission light L2. In this manner, the puncture light (the sense of glare to be felt) can be further reliably eliminated, and the appearance is further improved.

### (Description of Examples Other Than Embodiment)

It is to be noted that, in the foregoing embodiment, a clearance lamp as a front combination lamp has been described. However, in the present invention, it is possible to apply to a vehicular lamp fixture other than the clearance lamp as the front combination lamp, for example, a daytime running lamp, a turn signal lamp, a cornering lamp or a fog lamp as a front combination lamp; or alternatively, a clearance lamp, a turn signal lamp, a tail lamp, a stop lamp, a tail and stop lamp, a backup lamp or the like as a rear combination lamp.

In addition, in the foregoing embodiment, the light guide members 3U, 3D each forms a columnar shape of which cross section is a circular shape. However, in the present invention, a light guide member may be formed in a columnar shape of which cross section is in a triangular shape, a rectangular shape, or a polygonal shape.

Further, in the foregoing embodiment, the diameter of each of the light guide members 3U, 3D is about 6 to 8 mm, and the width of the reflection surface 33 is about 2 mm. However, in the present invention, a dimension in the diameter of each of the light guide members 3U, 3D and a dimension in the width of the reflection surface are not limited in particular.

Furthermore, in the foregoing embodiment, the light guide members 3D, 3U each form a substantial V-shape in a front view. However, in the present invention, the shape of each of the light guide members 3U, 3D is not limited in particular.

Still furthermore, in the foregoing embodiment, the lamp lens 6 is composed of a transparent lens. However, in the present invention, a diffusive prism, for example, a fisheye prism or the like may be provided at a lamp lens.

Yet furthermore, in the foregoing embodiment, semiconductor-type light sources 2 each are provided at incidence surface 30 side on one end face of a respective one of the two light guide members 3U, 3D. That is, two semiconductor-type light sources 2 are disposed. However, it may be that only one semiconductor-type light source 2 is disposed.

Still Furthermore, in the foregoing embodiment, the two light guide members 3U, 3D are connected in series in the overlapping surfaces 32U, 32D. However, in the present invention, it may be that three light guide members are connected in series in an overlapping surface.

### DESCRIPTION OF REFERENCE NUMERALS

- 1: Vehicular lamp fixture
- 10: Lamp unit
- 2: Semiconductor-type light source
- 20: Light emitting portion
- 21: Board
- 3U, 300U: Light guide member (upper side light guide member)
- 3D, 300D: Light guide member (lower side light guide member)
- 30: Incidence surface
- 31: Emission surface
- 32U, 320U: Overlapping surface (upper side overlapping surface)
- 32D, 320D: Overlapping surface (lower side overlapping surface)
- 33: Reflection surface
- 35: Stepped surface
- 4: Low beam headlamp
- 5: High beam headlamp
- 6: Lamp lens
- 7: Inner panel
- 70: Through hole
- 71: Storage groove portion
- A2, A2: Dimensions
- EP: Eye (eye point) of person
- L1: Incident light
- L2: Emission light
- L3: Reflection light
- L5, L50: Leakage light
- Z: Light guide direction

## Claims

1. Two vehicular light guide members each forming a rod shape to guide light by utilizing full reflection at an inside and overlapping each other in overlapping surfaces,
wherein the overlapping surfaces of the two vehicular light guide members each incline with respect to a light guide directions of a respective one of the two vehicular light guide members, and
one of the overlapping surfaces of the vehicular light guide members covers another one of the overlapping surfaces of the vehicular light guide members at a side of an emission direction in which the light of each of the two vehicular light guide members is emitted to an outside.

2. The vehicular light guide members according to claim 1,
wherein the overlapping surfaces of the two vehicular light guide members are respectively provided at parts, each of which is perpendicular or substantially perpendicular with respect to the light guide direction, and
the overlapping surface of the vehicular light guide member at an upper side covers the overlapping surface of the vehicular light guide member at a lower side, at the side of the emission direction.

3. The vehicular light guide members according to claim 1,
wherein the overlapping surfaces of the two vehicular light guide members each are composed of a curved surface.

4. The vehicular light guide members according to claim 1,
wherein a dimension in the light guide direction of the overlapping surface of each of the two vehicular light guide members is about 3 to 4 times larger than a dimension which is perpendicular or substantially perpendicular with respect to the light guide direction of each of the two vehicular light guide members.

5. A vehicular lamp fixture comprising:
a lamp housing and a lamp lens which partition a lamp room; and
a light source which is disposed in the lamp room and the vehicular light guide members according to claim 1 to make light from the light source incident.

6. The vehicular lamp fixture according to claim 5,
wherein the vehicular light guide members each form a shape along an exterior shape of the lamp lens.
